# EUROPÄISCHE PATENTSCHRIFT

(11) **EP 1 896 331 B1**
(45) Veröffentlichungstag und Bekanntmachung des Hinweises auf die Patenterteilung: **29.07.2009**
(21) Anmeldenummer: 06776084.3
(22) Anmeldetag: 27.06.2006
(51) Int. Cl.: B65C 9/22

(54) **VORRICHTUNG ZUM EINBRINGEN VON KLEBSTOFF IN EIN BEHEIZBARES LEIMWERK**
DEVICE FOR INTRODUCING ADHESIVE INTO A HEATABLE PASTING DEVICE
DISPOSITIF CONCU POUR INTRODUIRE DE L'ADHESIF DANS UNE UNITE D'ENCOLLAGE CHAUFFANTE

(30) Priorität: 29.06.2005 DE 202005010336 U
(43) Veröffentlichungstag der Anmeldung: 12.03.2008
(73) Patentinhaber: KRONES AG, 93073 Neutraubling (DE)
(72) Erfinder: THALLER, Robert, 93345 Hausen (DE)
(86) Internationale Anmeldenummer: PCT/EP2006/006165
(87) Internationale Veröffentlichungsnummer: WO 2007/000306

(56) Entgegenhaltungen:
- EP-A2- 0 718 234
- DE-U1- 9 313 524
- GB-A- 2 060 327
- US-A- 1 768 488
- US-A- 5 775 542

## Beschreibung

Die Erfindung betrifft eine Vorrichtung zum Einbringen von bei Raumtemperatur nicht fließfähigen Klebstoffen in beheizbare Leimwerke gemäß dem Oberbegriff des Anspruchs 1 und wie aus US 5,775,542 bekannt.

Leimwerke von Etikettier- oder sonstigen Verpackungsmaschinen haben in der Regel einen Vorratsbehälter mit integrierter Heizung für den Klebstoff, um diesen auf die erforderliche Verarbeitungstemperatur zu bringen, bei der der Klebstoff dann in flüssiger Phase vorliegt (siehe Fig. 14-17 von DE 29 41 458 A1 oder DE 91 02 068 U). Dabei kann es sich beispielsweise um einen UV-aushärtbaren HeißLeim (z.B. KRONES-colfix HM 3002) handeln, der bei Raumtemperatur von wachsartiger Konsistenz ist und in Transportbehältern wie Metalldosen oder dgl. abgefüllt vom Hersteller beliefert wird. Die verarbeitungstemperatur im Leimwerk liegt im Bereich zwischen 100 -120 Grad Celsius. Problematisch ist das Einbringen des starren Klebstoffes in den Vorratsbehälter eines Leimwerks. Bislang musste der Klebstoff in einem heißen Wasserbad zum Erweichen gebracht oder durch Schaben aus den Metalldosen entnommen werden. Beide Methoden sind umständlich und zeitintensiv.

Aus diesem Grund wird bei einer in der US 1,768,488 offenbarten Vorrichtung der Klebstoff-Transportbehälter von einer Halteeinrichtung mit der Öffnung nach unten gehalten. Unterhalb der Halteeinrichtung ist eine Heizspirale angebracht, über den die Halteeinrichtung und indirekt auch der Klebstoff-Transportbehälter beheizt werden. Dadurch verflüssigt sich der Klebstoff und fließt in einen Trog, von wo aus er weiterverarbeitet wird.

Die US 5,775,542 offenbart ein Verfahren zur Entleerung eines Tanks der mit einer schmelzbaren Substanz gefüllt ist. Der Tank wird in eine Klemmvorrichtung eingebracht, in der der Tank über eine Schwenkvorrichtung mit der Tanköffnung nach unten auf einen Behälter aufgesetzt wird. Der Behälter und der Tank werden beheizt, wodurch die Substanz schmilzt und in eine Wanne fließt, von der aus die Substanz weiterverarbeitet wird.

Nachteilig bei diesen Lösungen ist jedoch, dass kein optimaler Sitz des Leim-Transportbehälters auf der Halteeinrichtung bzw. auf dem aufzusetzenden Behälter, insbesondere dem Vorratsbehälter eines Leimwerks garantiert ist.

Demgegenüber soll eine verbesserte Klebstoffeinbringung in den Vorratsbehälter eines Leimwerks angegeben werden.

Gelöst wird die Aufgabe durch eine beheizbare Aufnahmevorrichtung für den Klebstoff-Transportbehälter, die starr oder lösbar mit dem Vorratsbehälter eines Leimwerks in Eingriff steht gemäß Anspruch 1. Der Transportbehälter nimmt in der Aufnahmevorrichtung eine Überkopfstellung ein, d.h. seine offene Mündung weist nach unten zur Einfüllöffnung des Vorratsbehälters.

Die Aufnahmevorrichtung kann aktiv, z.B. über elektrische Heizelemente oder dgl. mit Wärme beaufschlagt, oder passiv durch Wärmeleitung vom beheizten Vorratsbehälter erwärmt werden.

Um eine schnelle verflüssigung des zunächst noch starren Klebstoffes im Transportbehälter zu erreichen, besitzt die Aufnahmevorrichtung eine mit dem Transportbehälter, insbesondere dessen Umfangfläche, möglichst vollflächig in Kontakt bringbare Wärmeübertragungsfläche. Diese wird bevorzugt durch eine spannbare Umreifung aus einem besonders gut wärmeleitenden Werkstoff, wie Aluminium oder Kupfer gebildet. Durch die vorspannbare Umreifung ist einerseits ein enges, von Maßtoleranzen des Transportbehälters weitgehend unabhängiges Anlegen der Wärmeübertragungsfläche an die Oberfläche des Transportbehälters möglich, und andererseits kann ein Transportbehälter nach dem Entleeren in den Vorratsbehälter des Leimwerks schnell durch einen vollen Transportbehälter ersetzt werden, indem die beispielsweise über Kniehebelschnellspanner erzeugbare Vorspannung aufgehoben wird.

Bevorzugt ist die Aufnahmevorrichtung vom Vorratsbehälter lösbar ausgeführt, um den Austausch der Transportbehälter zu erleichtern. Zu diesem Zweck ist die Aufnahmevorrichtung in Verbindung mit einem Zentrierstück an der Befüllöffnung des Vorratsbehälters steckbar ausgeführt und kann mit einer Schnellspannvorrichtung in der Betriebstellung zuverlässig am Vorratsbehälter festgelegt werden.

Nachfolgend wird eine bevorzugte Ausführungsform anhand der Fig. beschrieben. Es zeigt:
- Fig. 1: eine Aufnahmevorrichtung in einer perspektivischen Darstellung,

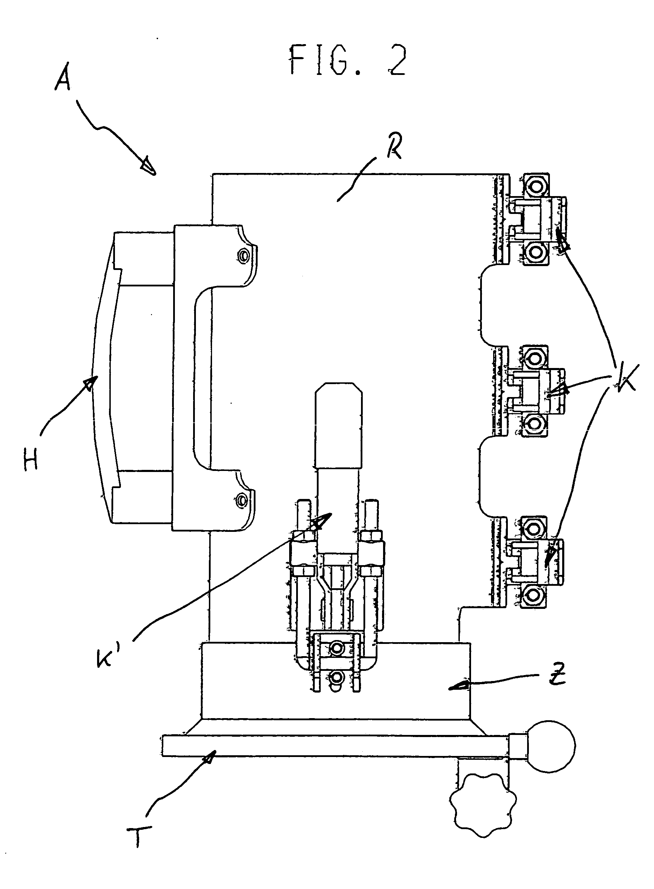

- Fig. 2: eine Seitenansicht der Aufnahmevorrichtung,
- Fig. 3: eine Draufsicht der Aufnahmevorrichtung und
- Fig. 4: eine Seitenansicht eines Leimwerks mit der Aufnahmevorrichtung nach den Fig. 1 bis 3.

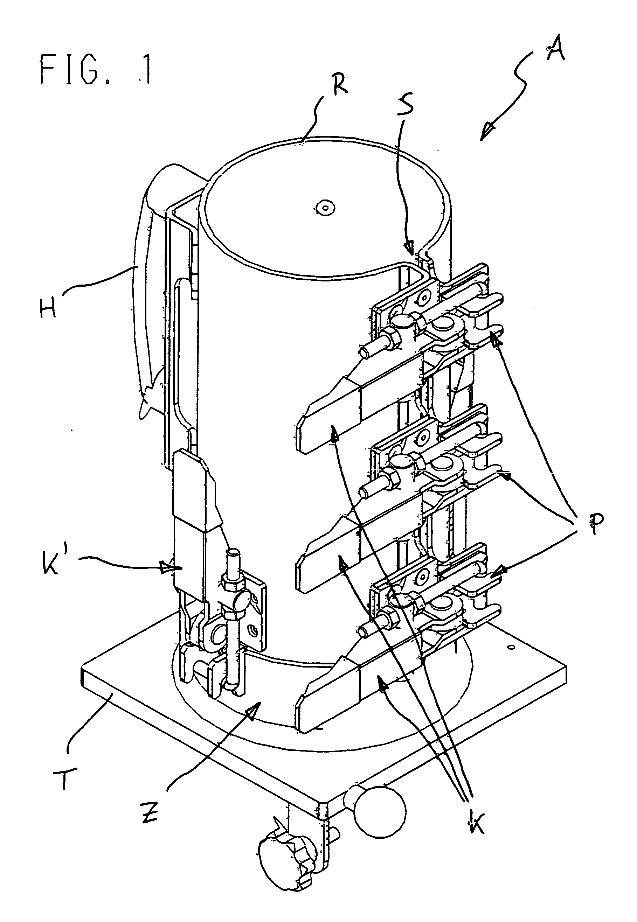

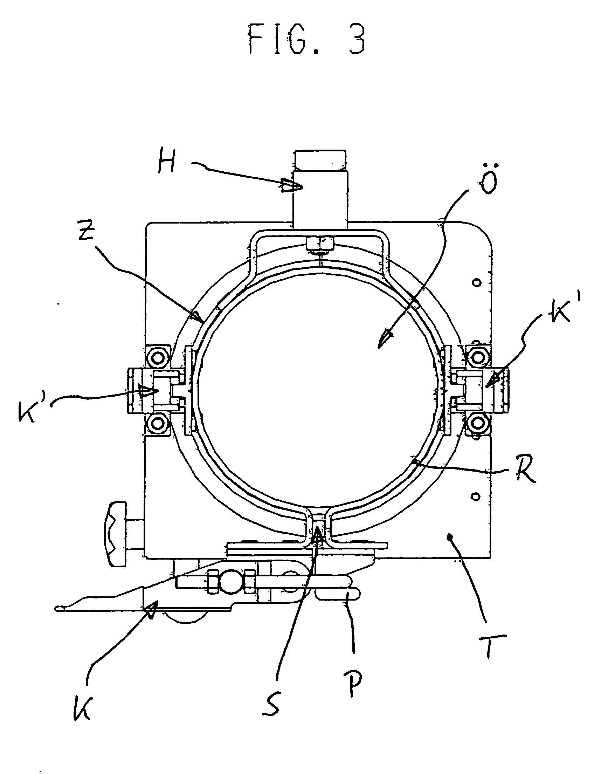

Die Aufnahmevorrichtung A gemäß Fig. 1 besteht im Wesentlichen aus einem Rohrkörper R mit einem seitlich angesetzten Handgriff H und einer einen Zentrierring Z aufweisenden Tragplatte T. Der Zentrierring Z umgibt eine in Fig. 3 dargestellte kreisrunde Öffnung Ö in der Tragplatte T.

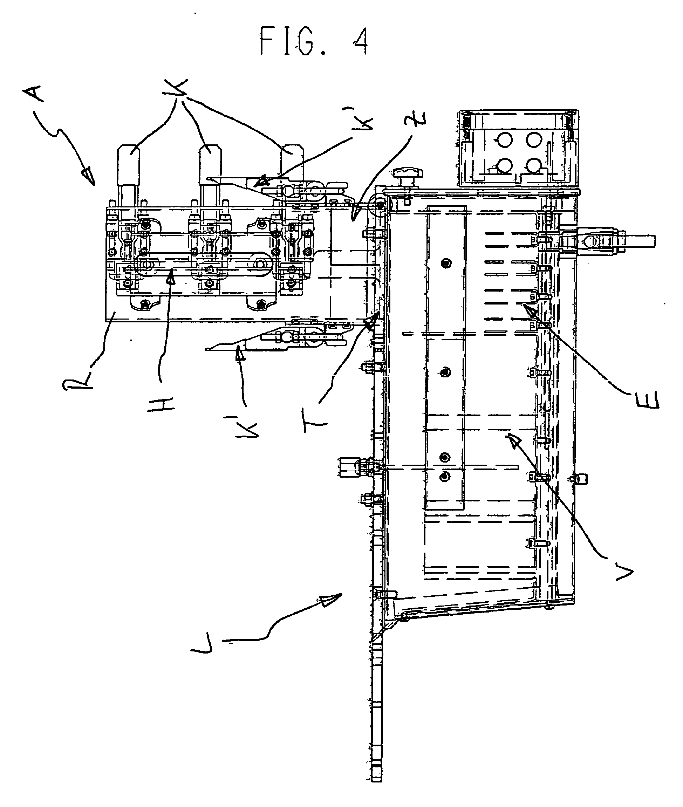

Die Tragplatte T ist über der Einfüllöffnung des Vorratsbehälters V eines in Fig. 4 dargestellten Leimwerks L einer Etikettiermaschine für Flaschen, Dosen oder dgl. Artikel angeordnet, beispielsweise um ein auf der Oberseite angebrachtes Schwenkgelenk. Das Leimwerk L ist in an sich bekannter Weise mit elektrischen Heizelemeten E im Vorratsbehälter V beheizbar.

Der Rohrkörper R besteht aus einem kreisrund gebogenen Blech und besitzt einen über seine gesamte Länge durchgehend verlaufenden Schlitz S. Die beiden am Schlitz S zueinander weisenden Ränder des Blechs sind jeweils annähernd -U-förmig nach außen gebogen und bilden Aufnahmeschenkel für Kniehebelschnellspanner K und deren Spannhaken P.

Die Kniehebelschnellspanner K bestehen in bekannter Weise aus einem Schwenkhebel mit einem daran schwenkbar angelenkten Bügel, der in einen auf dem gegenüberliegenden Aufnahmeschenkel angeordneten Spannhaken P formschlüssig eingreift. Wie aus der Fig. 1 zu erkennen ist, sind insgesamt drei Kniehebelschnellspanner K in gleichmäßigen Abständen übereinander am Rohrköper R angeordnet.

Im geöffneten Zustand der Kniehebelschnellspanner K federt der Rohrkörper R im Bereich des Schlitzes S auseinander und vergrößert dabei seinen Innendurchmesser, wenn er sich mit seinem unteren Ende nicht im Zentrierring Z befindet. In diesem Zustand kann der Rohrkörper R über eine mit bei Raumtemperatur starrem Klebstoff gefüllte Dose gestülpt werden. Durch Schließen der Kniehebelschnellspanner K schmiegt sich der Rohrkörper R eng an die Mantelfläche der vorzugsweise metallischen Dose (nicht dargestellt) und bildet eine reibschlüssige Umreifung. Mit der offenen Dosenmündung nach unten weisend kann der Rohrkörper R von oben in die Öffnung des Zentrierrings Z eingeführt werden, bis seine Stirnfläche auf einer innenliegenden, nicht dargestellten Absatzfläche des Zentrierrings aufliegt. Mit seitlich am Rohrkörper R angebrachten Kniehebelschnellspannern K' kann der Rohrköper R am Zentrierring Z dauerhaft festgelegt werden.

Sowohl die Tragplatte T mit dem darauf angeschweißten Zentrierring Z als auch der Rohrkörper R bestehen aus einem Material mit guter Wärmeleitfähigkeit. Aluminium ist hierfür besonders geeignet.
Durch die im Vorratsbehälter V des Leimwerks L nach oben steigende Wärme erfolgt eine passive Beheizung des Rohrköpers R über die Tragplatte T und den Zentrierring Z. Vom Rohrkörper R aus überträgt sich die Wärme auf die umreifte Dose und den Klebstoff, der sich durch Temperaturerhöhung allmählich verflüssigt und nach unten in den vorratsbehälter V fließt.

Davon abweichend wäre auch eine aktive Beheizung des Rohrkörpers R und ggf. auch des Zentrierrings Z durch elektrische Heizdrähte oder dgl. denkbar, was jedoch zusätzlichen Aufwand verursacht.

Das Leimwerk L ist Bestandteil einer Etikettiermaschine zum Ausstatten von Flaschen oder dgl. Gefäße mit beispielweise Rundumetiketten, die vor dem Aufwickeln an ihren senkrechten Rändern mit einem vertikalen Leimstreifen versehen werden. Der Leim ist vorzugsweise ein Heißleim, insbesondere ein uvhärtbarer Heißleim.

## Patentansprüche

1. Vorrichtung zum Einbringen von Klebstoff in ein beheizbares Leimwerk (L) mit einem Vorratsbehälter (V), aufweisend eine beheizbare Aufnahmevorrichtung (A) für einen Klebstoff-Transportbehälter,
wobei die Aufnahmevorrichtung (A) durch Wärmeleitung passiv vom Vorratsbehälter (V) des Leimwerks (L) oder durch aktive Beheizung beheizbar ist,
die Aufnahmevorrichtung (A) eine um einen Klebstoff-Transportbehälter spannbare Umreifung aufweist,
und die spannbare Umreifung durch einen in Längsrichtung geschlitzten Rohrkörper (R) gebildet wird, dessen Längsränder eine Spannvorrichtung (K, P) zugeordnet ist, **dadurch gekennzeichnet, dass** die Aufnahmevorrichtung (A) einen Zentrierring (Z) für den Rohrkörper (R) aufweist, der einen Stecksitz zur lösbaren Aufnahme des Rohrkörpers (R) bildet.

2. Vorrichtung nach Anspruch 1, **dadurch gekennzeichnet, dass** der Rohrkörper (R) mit einer Spannvorrichtung (K') am Zentrierring (Z) festlegbar ist.

3. Vorrichtung nach Anspruch 1 oder 2, **dadurch gekennzeichnet, dass** sich die Aufnahmevorrichtung (A) über einer Einfüllöffnung an der Oberseite des Vorratsbehälters (V) befindet.

4. Vorrichtung nach Anspruch 3, **dadurch gekennzeichnet, dass** die Aufnahmevorrichtung (A) eine über der Einfüllöffnung befestigbare Tragplatte (T) aufweist.

5. Vorrichtung nach Anspruch 4, **dadurch gekennzeichnet, dass** die Tragplatte (T) schwenkbar am Vorratsbehälter (V) gelagert ist.

6. Vorrichtung nach wenigstens einem der vorhergehenden Ansprüche 1 bis 5, **dadurch gekennzeichnet, dass** die Aufnahmevorrichtung (A) aus Werkstoffen mit guter Wärmeleitfähigkeit, insbesondere Aluminium oder Kupfer besteht.

7. Vorrichtung nach wenigstens einem der Ansprüche 1 bis 6, **dadurch gekennzeichnet, dass** die Aufnahmevorrichtung (A) Bestandteil eines Heißleimwerks (L) einer Etikettiermaschine ist.

8. Vorrichtung nach wenigstens einem der vorhergehenden Ansprüche 1 bis 7, **dadurch gekennzeichnet, dass** die Vorrichtung einen seitlichen angesetzten Handgriff (H) aufweist.

## Claims

1. Device for introducing adhesive into a heatable pasting device (L) with a storage container (V), which has a heatable receiving device (A) for an adhesive transport container,
in which the receiving device (A) is passively heatable by heat conductance from the storage container (V) of the pasting device (L) or by active heating,
the receiving device (A) has strapping that can be stretched around an adhesive transport container,
and the stretchable strapping is formed by a tubular body (R) slotted in the longitudinal direction, to whose longitudinal edges is allocated a tensioning device (K, P), **characterised in that** the receiving device (A) has a centring ring (Z) for the tubular body (R), which forms an insertion seat for the detachable accommodation of the tubular body (R).

2. Device according to claim 1, **characterised in that** the tubular body (R) can be secured on the centring ring (Z) with a tensioning device (K').

3. Device according to claim 1 or 2, **characterised in that** the receiving device (A) is located above a feed opening on the upper side of the storage container (V).

4. Device according to claim 3, **characterised in that** the receiving device (A) has a base plate (T) that can be fastened above the feed opening.

5. Device according to claim 4, **characterised in that** the base plate (T) is supported on the storage container (V), so that it can swivel.

6. Device according to at least one of the foregoing claims 1 to 5, **characterised in that** the receiving device (A) consists of materials with good thermal conductivity, particularly aluminium or copper.

7. Device according to at least one of claims 1 to 6, **characterised in that** the receiving device (A) is a component of a heatable pasting device (L) of a labelling machine.

8. Device according to at least one of the foregoing claims 1 to 7, **characterised in that** the device has a laterally attached hand grip (H).

## Revendications

1. Dispositif pour alimenter en adhésif, une unité d'encollage chauffante (L), comprenant un réservoir d'alimentation (V) ayant un dispositif de réception chauffant (A) pour un réservoir de transport d'adhésif, le dispositif de réception (A) est chauffé par conductivité de façon passive à partir du réservoir d'alimentation (V) de l'unité d'encollage (L) ou par chauffage actif,
le dispositif de réception (A) comporte un cerclage autour du réservoir de transport d'adhésif, ce cerclage pouvant être serré, et
le cerclage susceptible d'être serré est formé par un corps tubulaire (R) fendu dans la direction longitudinale et dont les bords longitudinaux sont combinés à un dispositif de serrage (K, P),
**caractérisé en ce que**
le dispositif de réception (A) comporte un anneau de centrage (Z) pour le corps tubulaire (R), cet anneau formant un siège d'enfichage pour recevoir le corps tubulaire (R) de manière amovible.

2. Dispositif selon la revendication 1,
**caractérisé en ce que**
le corps tubulaire (R) est fixé à l'anneau de centrage (Z) par un dispositif de centrage (K').

3. Dispositif selon l'une quelconque des revendications 1 ou 2,
**caractérisé en ce que**
le dispositif de réception (A) se trouve au-dessus d'un orifice de remplissage au niveau du côté supérieur du réservoir d'alimentation (V).

4. Dispositif selon la revendication 3,
**caractérisé en ce que**
le dispositif de réception (A) comporte une plaque de support (T) qui se fixe au-dessus de l'orifice de remplissage.

5. Dispositif selon la revendication 4,
**caractérisé en ce que**
la plaque de support (T) est montée de manière pivotante sur le réservoir d'alimentation (V).

6. Dispositif selon au moins l'une quelconque des revendications précédentes 1 à 5,
**caractérisé en ce que**
le dispositif de réception (A) est en des matériaux ayant une bonne conductivité thermique, notamment en aluminium ou en cuivre.

7. Dispositif selon au moins l'une quelconque des revendications 1 à 6,
**caractérisé en ce que**
le dispositif de réception (A) fait partie d'un groupe d'encollage à chaud (L) d'une machine d'étiquetage.

8. Dispositif selon au moins l'une quelconque des revendications précédentes 1 à 7,
**caractérisé en ce que**
le dispositif comporte une poignée (H) fixée sur le côté.
